# EUROPEAN PATENT SPECIFICATION

(11) **EP 1 704 701 B1**
(45) Date of publication and mention of the grant of the patent: **18.07.2007**
(21) Application number: 04805882.0
(22) Date of filing: 04.11.2004
(51) Int. Cl.: H04L 29/12, G06F 17/30

(54) **RESOLUTION OF DOMAIN NAMES**
AUFLÖSUNG VON DOMÄNEN-NAMEN
RESOLUTION DES NOMS DE DOMAINES

(30) Priority: 04.11.2003 GB 0325691
(43) Date of publication of application: 27.09.2006
(73) Proprietor: Dotworlds Ltd, Wembley Middlesex HA9 0DW (GB)
(72) Inventor: RETKIN, Brian, Anthony 14 Grendon Gardens, Middlesex HA9 9NE (GB); FOAKES, Simon E., Ponta Da Praia, Santo 11030-100 (BR)
(74) Representative: Jones, Keith William
(86) International application number: PCT/GB2004/004639
(87) International publication number: WO 2005/046184

(56) References cited:
- WO-A-02/13057
- US-A1- 2002 059 396
- MOCKAPETRIS P: "RFC 1034 Domain Names - Concepts and Facilities" NETWORK WORKING GROUP REQUEST FOR COMMENTS, XX, XX, November 1987 (1987-11), pages 1-55, XP002278155
- ANONYMOUS URL - HTTP://DEVELOPER.NETSCAPE.COM/DOCS/MANUALS /COMMUNICATOR/PLUGINDEX.HTM DWWW- 1997-01-15: "Plug-in Guide, Chapter 1: Plug-in Basics" NETSCAPE COMMUNICATOR MANUAL, 15 January 1997 (1997-01-15), XP002252262

## Description

This invention relates to resolution of network names.

Most users of a computer network, and in particular, the Internet, rely on symbolic names to identify hosts and domains on the network. The symbolic names must be translated into machine addresses (IP addresses, in the case of the Internet) to enable data to be routed to and from a host. The relation between symbolic names and addresses was originally maintained in a host file on each machine on the network. However, as networks grew in size, maintenance of host databases became an ever-increasing burden, so the task was entrusted to name resolution (DNS) severs that maintain a centralised database of names and addresses.

Owners of private networks have virtually unlimited control over the names that can be used in their networks. However, in the context of the Internet, domain names are normally resolved with reference to DNS servers that are maintained by an Internet service provider or a broadband provider. Such servers operate within a hierarchy of servers, ultimately controlled by The Internet Corporation for Assigned Names and Numbers (ICANN). The policies of ICANN, and national domain registers recognised by ICANN restrict the choice of names that can be obtained by users.

In principle, anyone could set up a publicly-accessible DNS server upon which they can record arbitrary names, and make the address of the server known. An Internet user could then add the server's address to the list of DNS servers accessed by their computer when a name is to be resolved. This would be quite acceptable to experienced users.

However, many users access the Internet through a dial-up connection that configures their computer's settings, including DNS server addresses, automatically using the dynamic host configuration protocol (DHCP). Such users may not be competent to or authorised to configure their computer's settings manually.

Mockapetris P: "RFC 1034 Domain Names - Concepts and Facilities" NETWORK WORKING GROUP REQUEST FOR COMMENTS, November 1987 (1987-11), pages 1-55 discloses a program which attempts a DNS look-up on an alternative name server upon detection of a DNS look-up.

An aim of this invention is to provide a system whereby an Internet user can access a domain namespace that contains arbitrary names without the need to reconfigure their computer manually.

From a first aspect, this invention provides a plugin for a browser comprising instructions which, during operation, instructs the browser to perform the following steps: to operate by detecting when the browser is about to display a DNS look-up failure and upon detection of when the browser is about to display a DNS look-up failure, to instruct the browser to attempt a DNS look-up on an alternative DNS server.

By providing this functionality in a browser plugin, installation and operation are transparent to the user. Moreover, the plugin operates only in the event of a DNS look-up failure so resolution of names using a previously configured server is unaffected.

The plugin may operate by detecting when the browser is about to display a DNS look-up failure. The browser may then perform a further name lookup before the DNS look up failure is displayed. This can be achieved readily by providing the browser with a configuration file that enables execution of a DNS look up on an alternative server.

The plugin may be suitable for installation in a web browser by being downloaded from a remote web site. Preferably, the plugin is packaged with an installer that installs the plugin with a minimum of user intervention.

To ensure that the plugin always directs the browser look-ups to a valid alternative DNS server, the plugin may be operative to contact a remote server to obtain data relating to the alternative name server. For example, such data may be obtained each time the operating system is started or each time the plugin is initiated. For example, the plugin may operate by configuring proxy server settings of the browser in which it is installed. A plugin embodying the invention may instruct the browser to communicate with the alternative DNS server through a proxy server.

From a second aspect, this invention provides a web browser that has a plugin according to claim 1 that operates upon detection of a DNS look-up failure to attempt a DNS look-up on an alternative name server. The browser may be configured by the plugin to refer DNS look-ups to an alternative server through configuration of its proxy settings. This is advantageous because the proxy settings of many browsers can be configured by configuration of the contents of a settings file.

From a third aspect, this invention provides a method of resolving a network name, the method comprising:
using a plugin for a browser to detect when the browser is about to display a DNS look-up failure; and
upon detection of when the browser is about to display DNS look-up failure, to execute a configuration script that attempts a DNS look-up on an alternative DNS server.

An embodiment of the invention will now be described in detail, by way of example, and with reference to the accompanying drawings, in which:

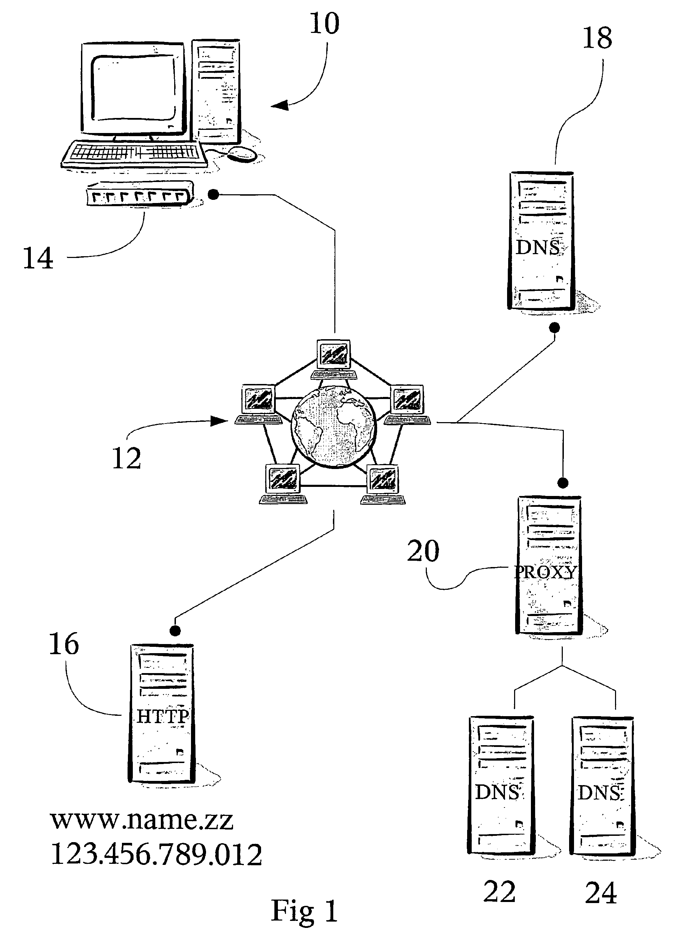

Figure 1 is a schematic diagram of a computer operating a browser embodying the invention to communicate with Internet locations.

To place the embodiment in context, a brief overview of the operation of a computer running an Internet browser will now be described.

A browser is normally an unprivileged user program executing on a networked client computer 10. In this example, the client computer 10 is a stand-alone computer that is connected to the Internet 12 through a dial-up device 14 such as ISDN or DSL terminal adapter or a modem. The browser can receive a request for a resource (e.g., a web page or a file on an ftp site), download that resource from a remote server 16, and do something with it on the client computer 10, such as render it, if it is a web page, or save it if it is a binary file.

A resource is identified by a string called a uniform resource location (URL) that identifies the host upon which the resource is to be found (in this example, the fictitious www.name.zz) and the location of the resource on the host. The host may be identified by its IP address (shown, again fictitiously, as 123.456.789.012) in dotted-decimal form, but it is more usually identified by a symbolic name. In the latter case, the browser must translate the symbolic name into an IP address, because this address is required to address the remote host computer on which the resource is located.

To resolve an IP address, the browser makes a request to a resolver service of the operating system under which it is executing. Typically, the resolver service will first look in a local database of host names, and if the name cannot be found, it passes the request to a remote DNS server 18. The address of the remote DNS server is configured within the operating system either statically by a system administrator or dynamically using DHCP, the latter being common on computers that access the Internet by way of a dial-up connection. (In fact, most operating systems allow several DNS servers to be specified that will be referred to in turn.) There can be two outcomes of the DNS look-up. First, the look-up can be successful, in which case, the resolver will return an IP address to the browser. This address can then replace the symbolic name within the URL. Alternatively, the name look-up may fail, in which case, the resolver will return a failure code to the browser.

In the event that the DNS look-up fails, a conventional web browser displays an error message or error page to inform the user that a request for a URL cannot be met. The behaviour and configuration of a browser embodying the invention will now be described. This embodiment will be described in the context of a computer running the Microsoft Windows operating system executing the Microsoft Internet Explorer web browser. However, it will be understood that the same principles can be applied to any other browser that can support plugins of a sufficient degree of complexity.

First, in order to prepare the browser for operation in accordance with the invention, a plugin must first be installed. This is achieved by first visiting a web site provided by the operator of a domain registration and domain name resolution service. Note that the installation need be performed only once by each user.

The user clicks on a link to download the plugin. The plugin is downloaded onto the user's computer, where the following actions occur:
a) Five files are installed that enable the domain name resolution system to operate. These include two dynamically linked libraries in DLL files (**dotworlds.dll** and **dotdetect.dll**), two executables in EXE files (**execdll.exe** and **kill.exe**) and a proxy configuration script in a PAC file (**dotworlds.pac**).
b) The dynamically linked libraries, the executables and the proxy configuration script are installed in the standard directory for such files in the Microsoft Windows file system.
c) The following items are written to the Microsoft Windows registry: Run key entry to run **dotdetect.exe,** which starts **execdll.exe,** plugin version entries and uninstall configurations.
   The registry key for running the plugin at start-up is:
   HKEY_LOCAL_MACHINE\SOFTWARE\Microsoft\Windows\CurrentVersio n\Run
   The registry key for adding the plugin to add/remove programs feature of Microsoft windows:
   HKEY_LOCAL_MACHINE\SOFTWARE\Microsoft\Windows\CurrentVersio n\Uninstall\Dotworlds
d) An uninstall system for the plugin package is also installed (unsdot.exe in Program Files stabdar folder, dotworlds sub folder).

The file **dotworlds.dll** is a function library that exports functions required by the plugin. The file **dotdetect.dll** detects the function library and runs the **execdll.exe** file. The executable **execdll.exe** serves to detect an Internet connection, configure the connection and update the proxy configuration file. The executable **kill.exe** is used during the uninstall process. The purpose of the proxy configuration file is to offer proxy configurations for the browser.

In the context of Microsoft Internet Explorer web browser, a user can configure separate proxy settings for use with each Internet dial-up account that is configured in the operating system. After installation, the plugin configures the user's current connection to use the proxy settings specified in the proxy configuration file. This can be achieved by activating the automatic configuration script option in Internet Explorer. Specifically, this is done by functions in **dotdetect-dll,** running **execdll.exe** during system start-up

To ensure use of the automatic configuration script on any Internet connection, and to ensure that the information in the proxy configuration file is up to date, the library **dotdetect.dll** is run whenever Microsoft Windows is started, this activating the **execdll.exe** executable. The executable **execdll.exe** starts a process that runs in the background and waits until an Internet connection is detected. Once this occurs, the process configures the current connection (from within the browser) to use the automatic configuration script (written to the proxy configuration file). The process file also checks the IP/domain configurations required by the proxy configuration file by visiting a server provided by the operator of the domain registry, from where it downloads a remote configuration file. The information in the remote configuration file is then rewritten to the proxy configuration file, so that the configuration script always uses up-to-date proxy IP information. This allows changes in the operator's systems to be communicated transparently to the user's computer. Having run once, the process then shuts down.

Once the above installation procedures have been performed, operation of the browser can continue.

Now consider what occurs if the remote DNS server 18 is unable to find the name requested (as would be the case with domains registered by the operator of the domain registry). The configuration script is used for every name lookup, but it tells the browser to use its normal configurations first, and only the alternative proxy configurations in case of error. Therefore, before the browser informs the user with of an error condition (having been configured to use the automatic configuration script) the browser uses the information contained in the proxy configuration script (found in the proxy configuration file) to try to resolve the URL using an alternative IP address, in this case, pointing to a proxy server 20 run by the operator of the domain registry. This proxy server is in turn linked in to two proprietary DNS servers 22, 24, which have been configured to resolve the domains offered by the operator of the registry, optionally along with all other conventional domain names. The browser makes the URL request to the proxy server 20, which in turn resolves the URL (if it can) using the proprietary DNS servers 22, 24, returning the correct IP address for the domain to the browser. This means that the operator's domain names are true domain names and not sub-domains of other ICANN domains. In this example, **.zz** is not a valid extension within the ICANN naming system, but can, should a user wish, be registered within the proprietary DNS server.

Thus, a domain registrar can install a DNS server, with an optional redundant second server. These may be made directly available over the Internet or may be protected by a proxy server.

## Claims

1. A plug-in for a browser, comprising instructions which during operation instructs the browser perform the following method steps:
to operate by detecting when the browser is about to display a DNS look-up failure; and
upon detection of when the browser is about to display a DNS look-up failure, instructs the browser to attempt a DNS look-up on an alternative DNS server (22,24).

2. A plugin according to claim 1 which instructs the browser to perform a further DNS name look-up on an alternative DNS server (22, 24) before the DNS look-up failure is displayed.

3. A plugin according to claim 1 or claim 2 which instructs the browser to execute a configuration script that attempts a DNS look-up in an alternative server.

4. A plugin according to any preceding claim that is suitable for installation in a web browser by being downloaded from a remote web site.

5. A plugin according to claim 4 that is packaged with an installer that installs the plugin with a minimum of user intervention.

6. A plugin according to any preceding claim that is operative to contact a remote server (20) to obtain data relating to the alternative name server (22, 24).

7. A plugin according to claim 6 which obtains such data each time the operating system is started or each time the plugin is initiated.

8. A plugin according to any preceding claim that instructs the browser to operate by configuring its proxy server settings.

9. A plugin according to any preceding claim that instructs the browser to communicate with the alternative DNS server (22, 24) through a proxy server (20).

10. A web browser that has a plugin according to claim 1 that operates upon detection of a DNS look-up failure to attempt a DNS look-up on an alternative DNS server (22, 24).

11. A web browser according to claim 10 that is configured by the plugin to refer DNS look-ups to an alternative server (22, 24) through configuration of its proxy settings.

12. A method of resolving a network name, the method comprising:
using a plug-in for a browser to detect when the browser is about to display a DNS look-up failure and, upon detection of when the browser is about to display DNS look-up failure, to execute a configuration script that attempts a DNS look-up on an alternative DNS server (22, 24).

## Patentansprüche

1. Eine Programmerweiterung für einen Browser, die Anweisungen beinhaltet, die den Browser während des Betriebs anweist, die folgenden Verfahrensschritte durchzuführen:
Betreiben durch Erfassen wenn der Browser im Begriff ist, einen DNS-Lookup-Fehler anzuzeigen; und
bei der Erfassung, wenn der Browser im Begriff ist, einen DNS-Lookup-Fehler anzuzeigen, Anweisen des Browsers, einen DNS-Lookup auf einem alternativen DNS-Server (22, 24) zu unternehmen.

2. Programmerweiterung gemäß Anspruch 1, die den Browser anweist, einen weiteren DNS-Namen-Lookup auf einem alternativen DNS-Server (22, 24) durchzuführen, bevor der DNS-Suchfehler angezeigt wird.

3. Programmerweiterung gemäß Anspruch 1 oder Anspruch 2, die den Browser anweist, ein Konfigurationsskript auszuführen, das einen DNS-Lookup in einem alternativen Server unternimmt.

4. Programmerweiterung gemäß einem der vorhergehenden Ansprüche, die dadurch für die Installation in einem Web-Browser geeignet ist, dass sie von einer Remote-Website heruntergeladen wird.

5. Programmerweiterung gemäß Anspruch 4, die mit einem Installateur geliefert wird, der die Programmerweiterung mit einem Minimum an Eingriff seitens des Benutzers installiert.

6. Programmerweiterung gemäß einem der vorhergehenden Ansprüche, die betriebsbereit ist, um einen Remote-Server (20) zu kontaktieren, um Daten zu erhalten, die sich auf den alternativen Nameserver (22, 24) beziehen.

7. Programmerweiterung gemäß Anspruch 6, die jedes Mal, wenn das Betriebssystem gestartet wird oder jedes Mal wenn die Programmerweiterung initiiert wird, derartige Daten erhält.

8. Programmerweiterung gemäß einem der vorhergehenden Ansprüche, die den Browser anweist, durch Konfigurieren seiner Proxyservereinstellungen betrieben zu werden.

9. Programmerweiterung gemäß einem der vorhergehenden Ansprüche, die den Browser anweist, durch einen Proxy-Server (20) mit dem alternativen DNS-Server (22, 24) zu kommunizieren.

10. Ein Web-Browser, der eine Programmerweiterung gemäß Anspruch 1 aufweist, die bei Erfassung eines DNS-Lookup-Fehlers bei dem Unternehmen eines DNS-Lookups auf einem alternativen DNS-Server (22, 24) betrieben wird.

11. Web-Browser gemäß Anspruch 10, der durch die Programmerweiterung konfiguriert ist, um DNS-Lookups an einen alternativen Server (22, 24) durch Konfiguration seiner Proxyeinstellungen zu verweisen.

12. Ein Verfahren zum Abrufen eines Netzwerknamens, wobei das Verfahren Folgendes beinhaltet:
Verwenden einer Programmerweiterung zum Erfassen, wenn der Browser im Begriff ist, einen DNS-Lookup-Fehler anzuzeigen, und bei der Erfassung, wenn der Browser im Begriff ist, einen DNS-Lookup-Fehler anzuzeigen, Ausführen eines Konfigurationsskripts, das einen DNS-Lookup auf einem alternativen DNS-Server (22, 24) unternimmt.

## Revendications

1. Un module externe pour un navigateur, comprenant des instructions, lequel, lors du fonctionnement, donne l'ordre au navigateur d'effectuer les étapes formant méthode suivantes :
de fonctionner en détectant le moment où le navigateur est sur le point d'afficher un échec de consultation DNS ; et
lors de la détection du moment où le navigateur est sur le point d'afficher un échec de consultation DNS, de donner l'ordre au navigateur de tenter une consultation DNS sur un autre serveur DNS (22, 24).

2. Un module externe selon la revendication 1, lequel donne l'ordre au navigateur d'effectuer une consultation de nom DNS supplémentaire sur un autre serveur DNS (22, 24) avant que l'échec de consultation DNS soit affiché.

3. Un module externe selon la revendication 1 ou la revendication 2, lequel donne l'ordre au navigateur d'exécuter un script de configuration qui tente une consultation DNS dans un autre serveur.

4. Un module externe selon n'importe quelle revendication précédente qui convient à une installation dans un navigateur internet par téléchargement à partir d'un site internet à distance.

5. Un module externe selon la revendication 4 qui est incorporé à un programme d'installation qui installe le module externe avec un minimum d'intervention de l'utilisateur.

6. Un module externe selon n'importe quelle revendication précédente qui fonctionne pour contacter un serveur à distance (20) afin d'obtenir des données relatives à l'autre serveur de nom (22, 24).

7. Un module externe selon la revendication 6, lequel obtient de telles données à chaque fois que le système d'exploitation est démarré ou à chaque fois que le module externe est initialisé.

8. Un module externe selon n'importe quelle revendication précédente qui donne l'ordre au navigateur de fonctionner en configurant ses paramètres de serveur de proximité.

9. Un module externe selon n'importe quelle revendication précédente qui donne l'ordre au navigateur de communiquer avec l'autre serveur DNS (22, 24) par l'intermédiaire d'un serveur de proximité (20).

10. Un navigateur internet qui a un module externe selon la revendication 1 qui fonctionne lors de la détection d'un échec de consultation DNS pour tenter une consultation DNS sur un autre serveur DNS (22, 24).

11. Un navigateur internet selon la revendication 10 qui est configuré par le module externe pour référer des consultations DNS à un autre serveur (22, 24) par l'intermédiaire de la configuration de ses paramètres de proximité.

12. Une méthode de résolution d'un nom réseau, la méthode comprenant :
utiliser un module externe pour un navigateur afin de détecter le moment où le navigateur est sur le point d'afficher un échec de consultation DNS et, lors de la détection du moment où le navigateur est sur le point d'afficher un échec de consultation DNS, afin d'exécuter un script de configuration qui tente une consultation DNS sur un autre serveur DNS (22, 24).
